(19) Europäisches Patentamt / European Patent Office / Office européen des brevets

(11) **EP 2 662 226 B1**

(12) **EUROPEAN PATENT SPECIFICATION**

(45) Date of publication and mention
of the grant of the patent:
**23.03.2016   Bulletin 2016/12**

(51) Int Cl.:
***B60C 11/00*** *(2006.01)*

(21) Application number: **13161407.5**

(22) Date of filing: **27.03.2013**

(54) **Motorcycle tire**

Motorradreifen

Pneu de motocyclette

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2012   JP 2012106953**

(43) Date of publication of application:
**13.11.2013   Bulletin 2013/46**

(73) Proprietor: **Sumitomo Rubber Industries, Ltd.
Kobe-shi,
Hyogo-ken (JP)**

(72) Inventor: **Shibamoto, Shohei**
**Kobe-shi, Hyogo-ken 651-0072 (JP)**

(74) Representative: **Manitz, Finsterwald & Partner
GbR
Martin-Greif-Strasse 1
80336 München (DE)**

(56) References cited:
**EP-A1- 2 108 529     EP-A1- 2 186 653
EP-A1- 2 402 176**

## Description

## Background of the invention

### Field of the Invention

The present invention relates to a motorcycle tire capable of improving turning stability and ride comfort.

## Description of the Related Art

Typically, a motorcycle tire has a tread portion having a tread outer surface which protrudes radially outwardly of the tire in a convex arc-like manner in order to obtain a sufficient ground contact area of the tread portion when a motorcycle is turning with a large camber angle.

JP-2007-131112-A1 discloses a motorcycle tire having a tread portion with a tread rubber which comprises a center portion disposed in a center region of the tread portion including a tire equator and a pair of shoulder portions disposed axially both sides of the center portion and having loss tangent larger than that of the center portion. Due to the shoulder portion having high hysteresis loss, such a motorcycle tire may have high grip performance during turning.

However, since the shoulder portion with large loss tangent tends to have low rigidity, turning stability of the tire is liable to decrease. Additionally, since the center portion of the tread rubber with high rigidity is difficult to sufficiently absorb vibrations from the ground when straight running, such a tire tends to deteriorate ride comfort.

EP 2 108 529 A1 discloses a motorcycle tire comprising a tread portion having a tread outer surface between tread edges, the tread outer surface protruding radially outwardly of the tire in a convex arc-like manner, the tread portion including a tread rubber portion, the tread rubber portion including a center portion disposed in a center region of the tread portion including a tire equator, a pair of shoulder portions each of which is disposed in each side of the tread edge and a pair of middle portions each of which is disposed between the center and shoulder portions in each side of the tire equator. The loss tangent of the rubber constituting each shoulder portion is disclosed to be in the range of 105 to 135 % of the loss tangent of the rubber constituting each middle portion. Further, the loss tangent of each of the rubbers constituting other tread regions is disclosed to be 105 to 150 % of the loss tangent of the rubber constituting the center portion.

EP 2 402 176 A1 discloses a motorcycle tire in which the loss tangent of the shoulder tread rubber is larger than the loss tangent of the central tread rubber. Further, the loss tangent of an intermediate tread rubber is disclosed to be in a range between 0.3 to 0.7, the loss tangent of the central tread rubber is disclosed to be in a range between 0.2 and 0.6, while the loss tangent of the shoulder tread rubber is disclosed to be in a range between 0.25 and 0.65.

Further prior art is disclosed in EP 2 183 653 A1.

SUMMARY OF THE INVENTION

The present invention has been worked out in light of the circumstances described above, and has a main object of providing a motorcycle tire capable of improving a turning stability and ride comfort.

In accordance with the present invention, there is provided a motorcycle tire comprising a tread portion having a tread outer surface between tread edges, the tread outer surface protruding radially outwardly of the tire in a convex arc-like manner, the tread portion including a tread rubber portion, the tread rubber portion including a center portion disposed in a center region of the tread portion including a tire equator, a pair of shoulder portions each of which is disposed in each side of the tread edge and a pair of middle portions each of which is disposed between the center and shoulder portions in each side of the tire equator, and the center, middle and shoulder portions satisfy the following relations:

$$E^*1 < E^*2 < E^*3 \, ,$$

$$0.9 \leq \tan\delta 1/\tan\delta 2 \leq 1.1,$$

and

$$0.9 \leq \tan\delta 2/\tan\delta 3 \leq 1.1,$$

wherein E*1, E*2 and E*3 are complex elastic moduli of the center portion, middle portion and shoulder portion respectively, and tan$\delta$1, tan$\delta$2 and tan$\delta$3 are loss tangent of the center portion, middle portion and shoulder portion respectively.

In this application including specification and claims, various dimensions, positions and the like of the tire refer to those under a normally inflated unloaded condition of the tire unless otherwise noted.

The normally inflated unloaded condition is such that the tire is mounted on a standard wheel rim (not shown) and is inflated to a standard pressure but loaded with no tire load.

The standard wheel rim means a wheel rim officially approved or recommended for the tire by standards organizations, the standard wheel rim is the "standard rim" specified in JATMA, the "Measuring Rim" in ETRTO, the "Design Rim" in TRA or the like, for example.

The standard pressure means the "maximum air pressure" in JATMA, the "Inflation Pressure" in ETRTO, and the maximum pressure given in the "Tire Load Limits at various Cold Inflation Pressures" table in TRA or the like.

## BRIEF DESCRIPTION OF THE DRAWINGS

Fig. 1 is a cross sectional view of a motorcycle tire showing an embodiment of the present invention.
Fig. 2 is a development view of a tread portion of the tire of Fig. 1.
Fig. 3 is a cross sectional view of a motorcycle tire showing another embodiment of the present invention.

## DETAILED DESCRIPTION

An embodiment of the present invention will be explained below with reference to the accompanying drawings.

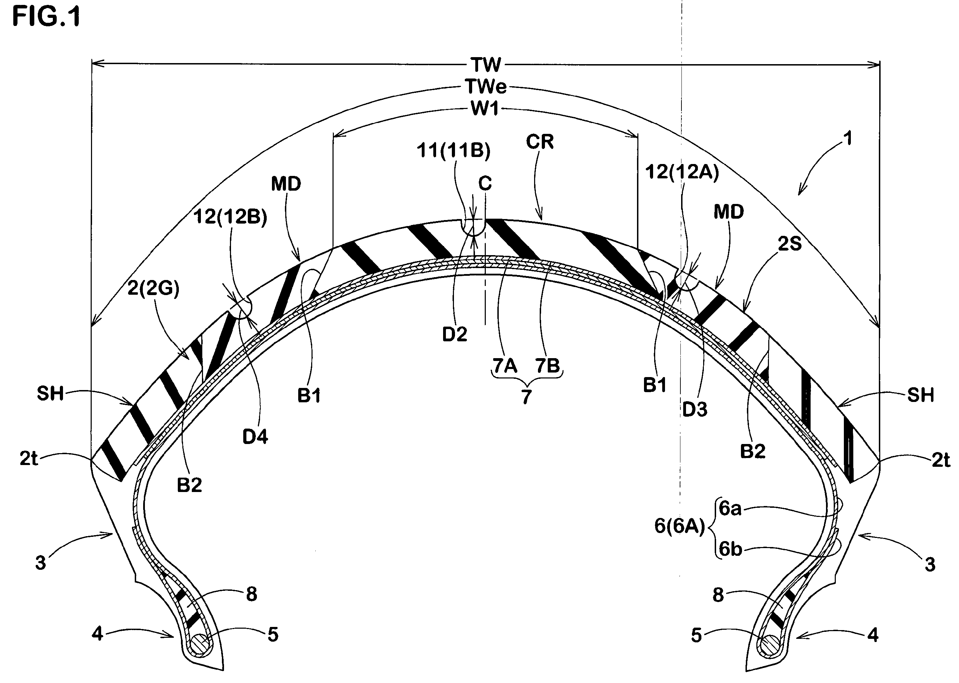

Fig. 1 shows a cross sectional view of a motorcycle tire (hereinafter it may simply be referred as "the tire") 1 in accordance with the present invention under the normally inflated unloaded condition.

Referring to Fig. 1, the tire 1 in accordance with the present invention comprises a tread portion 2, a pair of sidewall portions 3 extending from axially both ends of the tread portion 2, a pair of bead portion 4 each with a bead core 5 therein, a carcass 6 extending between bead cores 5 through the tread portion 2 and sidewall portions 3, a belt layer 7 disposed radially outside the carcass 6 in the tread portion 2 and a tread rubber portion 2G disposed radially outside of the belt layer 7.

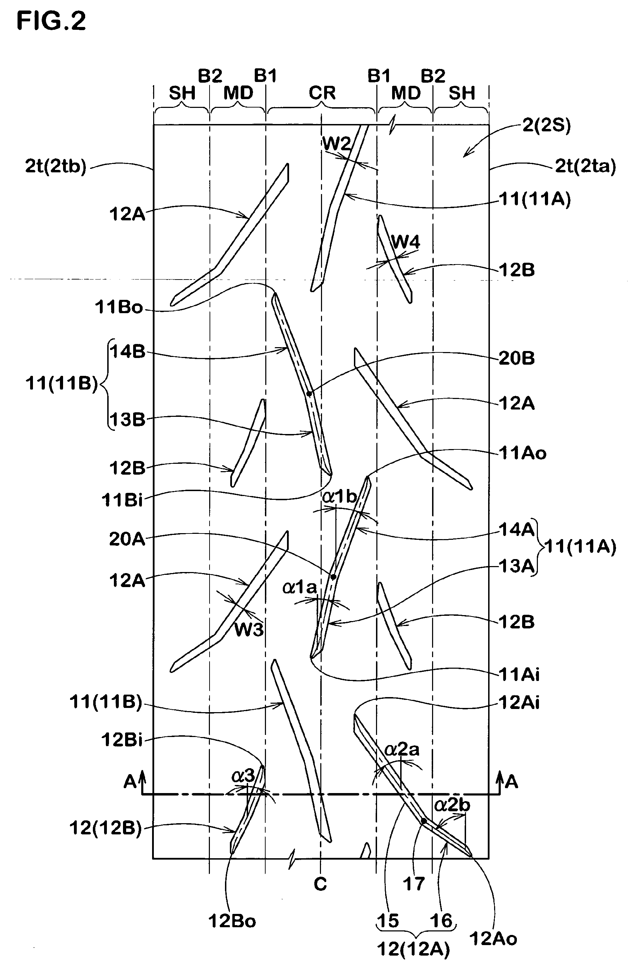

The tread portion 2 has a ground contact surface 2S between a pair of tread edges 2t, 2t which protrudes radially outwardly while curving in a convex arc-like manner so that a wide ground contact area is obtained during turning with a large camber angle. Each tread edge 2t is provided at the axially outmost end of the tire to define a tread width Tw which is an axial distance therebetween being a tire maximum width. The tread edges 2t include a first tread edge 2ta and a second tread edge 2tb (shown in Fig. 2).

The carcass 6 includes at least one carcass ply 6A of cords arranged at an angle of from 65 to 90 degrees with respect to the tire equator C in this embodiment. The carcass ply 6A comprises a main portion 6a extending between bead cores 5 and a pair of turn-up portions 6b each turned up around the bead core 5 from the axially inside to the outside of the tire.

Preferably, organic fiber cords such as rayon, nylon, polyester may be used for the carcass cord. A bead apex 8 made of a hard rubber is provided between the main portion 6a and the turned up portion 6b which extends and tapers radially outwardly from the bead core 5.

In this embodiment, the belt layer 7 comprises two belt plies 7A and 7B each having parallel cords arranged at an angle with respect to the tire equator C so that the plies 7A and 7B cross each other. As the belt cords, steel cord and high modulus organic fiber cords such as aramid, rayon can be preferably used.

The tread rubber portion 2G includes a center portion CR disposed in a center region of the tread portion 2 including the tire equator C, a pair of shoulder portions SH each of which is disposed in each side of the tread edge 2t and a pair of middle portions MD each of which is disposed between the center and shoulder portions CR, SH in each side of the tire equator C. The center portion CR, the shoulder portion SH and the middle portion MD are made of different rubber compositions, respectively.

In this embodiment, the center portion CR has a development width W1 in a range of from 28% to 40% of the tread development width TWe on the ground contact surface 2s. The center portion has an axial center corresponding to the tire equator C, in this embodiment. Typically, when the tire is traveling in straight, a ground contact width of the tread portion 2 is about 25% of the tread development width TWe. Accordingly, since the center portion CR has the width W1 larger than the ground contact width above, uneven wear such as step wear at a boundary between the center portion CR and the middle portion SH may be prevented.

Here, the ground contact width of the tread portion 2 during straight traveling is measured under a normally inflated loaded condition such that the tire 1 is mounted on the standard wheel rim and inflated to the standard pressure and loaded with a standard tire load, as a maximum axial width in the contact patch of the tread portion.

The standard load means the "maximum load capacity" in JATMA, the "Load Capacity" in ETRTO, and the maximum value given in the above-mentioned table in TRA or the like. In case that an officially approved tire load is not available, a tire load recommended by the tire manufacturer may be applied.

The tread rubber portion 2G includes a pair of boundaries B1 each of which is between the center portion CR and the middle portion MD, and a pair of boundaries B2 each of which is between the middle portion MD and the shoulder portion SH. Each of boundaries B1 and B2 extends from the ground contact surface 2s toward the belt layer 7 with an axially outward inclination.

Thus, since rubber property of the tread rubber portion 2G gradually changes, transient characteristic of the tire between straight traveling and turning may improve. In another aspect, the boundaries B1 and B2 may extend along a nominal line perpendicular to the ground contact surface 2S or the belt layer 7. In still another embodiment, the boundaries B1 and B2 may extend with an axially inward inclination.

Additionally, the center portion CR, middle portion MD and shoulder portion SH satisfy the following relations (1), (2) and (3) :

$$E^{*}1 < E^{*}2 < E^{*}3 \ (1);$$

$$0.9 \leq \tan \delta1/\tan \delta2 \leq 1.1 \ (2);$$

and

$$0.9 \leq \tan \delta2/\tan \delta3 \leq 1.1 \ (3).$$

where, $E^{*}1$, $E^{*}2$ and $E^{*}3$ are complex elastic moduli of the center portion CR, middle portion MD and shoulder portion SH, respectively and $\tan \delta1$, $\tan \delta2$ and $\tan \delta3$ are loss tangent of the center portion CR, middle portion MD and shoulder portion SH, respectively.

Here, the complex elastic modulus $E^{*}$ and loss tangent ($\tan \delta$) were measured with a viscoelastic spectrometer made by IWAMOTO SEISAKUSYO according to the Japanese industrial Standard JIS-K-6394. The measuring conditions are as follows:

Temperature: 70 degrees C;
Deformation mode: tensile;
Frequency: 10 Hz;
Amplitude: plus/minus 2%; and
Initial elongation: 10 %.

Generally, the complex elastic modulus $E^{*}$ and loss tangent ($\tan \delta$) are calculated using the following expressions (6) and (7), respectively:

$$E^{*}2 = E''/LC \ (6)$$

and

$$\tan \delta = E''/E' \ (7).$$

Here, $E^{*}$ is a complex elastic modulus, $E''$ is a loss modulus, LC is a loss compliance, $\tan \delta$ is a loss tangent and $E'$ is a storage modulus. These parameters are measured according to the same condition with the loss tangent, and the loss compliance is given by the expression (6). These expressions (6) and (7) satisfy the following relation (8):

$$E^{*}2 = E' \ x \ \tan \delta \ / \ LC \ (8).$$

Accordingly, a complex elastic modulus (E*) of a rubber portion may be increased toward the shoulder portion SH from center portion CR by decreasing the loss compliance (LC) while maintaining the loss tangent (tan δ) and the storage modulus E'.

since the tire 1 in accordance with the present embodiment has the tread rubber portion 2G having gradually increasing complex elastic moduli from the center portion SH toward the shoulder portion SH, turning stability of the tire may improve. Meanwhile, since loss tangent tan δ1 to tan δ2 of the tread rubber portion 2G are substantially the same from the center portion SH toward the shoulder portion SH, transient characteristic between the straight traveling and turning may also improve. Additionally, since a center region of the tread rubber portion 2G has low rigidity, such a tire absorbs vibrations from the ground so that the ride comfort is improved.

Here, when the ratio tanδ1/tanδ2 is less than 0.9, the transient characteristic and uneven wear resistance of the tread rubber portion 2G may deteriorate due to large difference in grip performance between the center portion CR and the middle portion MD. when the ratio tanδ1/tanδ2 is more than 1.1, turning stability of the tire may deteriorate due to low grip performance of the middle portion MD. Preferably, the ratio tanδ1/tanδ2 is in a range of from not less than 0.95, and not more than 1.05.

From the same point of view above, the ratio tanδ2/tanδ3 is preferably in a range of from not less than 0.95, and not more than 1.05.

In order to further improve the effect above, the loss tangent tan δ1 of the center portion CR is preferably in a range of from 0.20 to 0.24. when the loss tangent tan δ1 of the center portion CR is less than 2.0, grip performance thereof may deteriorate. When the loss tangent tan δ1 is more than 2.4, wear resistance of the center portion CR may deteriorate. Still further preferably, the loss tangent tan δ1 of the center portion CR is in a range of from 0.21 to 0.23.

Preferably, the complex elastic modulus E*1 of the center portion CR is in a range of from 4.0 to 5.5 MPa. When the complex elastic modulus E*1 is more than 5.5MPa, ride comfort of the tire may deteriorate due to the center portion CR with high rigidity. When the complex elastic modulus E*1 is less than 4.0MPa, turning stability of the tire may deteriorate. Still further preferably, the complex elastic modulus E*1 is in a range of from 4.3 to 4.9 MPa.

Preferably, the ratio (E*2-E*1)/E*1 of the difference (E*2-E*1) between complex elastic moduli E*2 and E*1 to the complex elastic modulus E*1 is in a range of from 1% to 20%. When the ratio (E*2-E*1)/E*1 is less than 1%, turning stability is liable to deteriorates. When the ratio (E*2-E*1)/E*1 is more than 20%, transient characteristic of the tire is liable to deteriorates. Still further preferably, the ratio (E*2-E*1)/E*1 is in a range of from 5% to 7%.

From the same point of view, the ratio (E*3-E*2)/E*2 of the difference (E*3-E*2) between complex elastic moduli E*3 and E*2 to the complex elastic modulus E*2 is preferably in a range of not less than 1%, more preferably not less than 5%, but preferably not more than 20%, more preferably not more than 7%.

Referring to Fig. 2, the tread portion 2 is provided with a plurality of center inclined grooves 11 and a plurality of outer inclined grooves 12 in each side of the tire equator C.

The center inclined grooves 11 include: a plurality of first center inclined grooves 11A which extend from the vicinity of the tire equator C toward the first tread edge 2ta; and a plurality of second center inclined grooves 11B which extend from the vicinity of the tire equator C toward the second tread edge 2tb. The first inclined grooves 11A and the second inclined grooves 11B are alternately arranged in the circumferential direction of the tire.

Each first center inclined groove 11A has an axially inner end 11Ai which positions in the side of the second tread edge 2tb than the tire equator C. Additionally, the first center inclined groove 11A has an axially outer end 11Ao which positions within the center portion CR.

Each second center inclined groove 11B has an axially inner end 11Bi which positions in the side of the first tread edge 2ta than the tire equator C. Additionally, the second center inclined groove 11B has an axially outer end 11Bo which positions within the center portion CR.

The first and second center inclined grooves 11A, 11B may improve drainage performance during straight traveling while maintaining rigidity of the middle and shoulder portions MD, SH. Preferably, maximum groove widths W2 of the center inclined grooves 11 are in a range of from 2% to 4% of the tread development width TWe. Maximum groove depths d2 (shown in Fig. 1) of the center inclined grooves 11 are preferably in a range of from 2% to 5% of the tread development width TWe.

Each first center inclined grooves 11A comprises an axially inner part 13A which extends from the inner end 11Ai with an angle α1a in a range of from 8 to 12 degrees with respect to the tire circumferential direction and an axially outer part 14A having an angle α1b in a range of from 18 to 22 degrees with respect to the tire circumferential direction. The inner part 13A and the outer part 13B are connected through an inflection point 20A. similarly, each second center inclined grooves 11B comprises an axially inner part 13B having the angle α1a, an axially outer part 14B having the angle α1b and an inflection point 20B.

Since the first and second center inclined grooves 11 have angles gradually increasing toward middle portion MD from the tire equator C, the tread portion 2 has enhanced torsional rigidity so that the transient characteristic between straight traveling and turning improves.

In each side of the tire equator C, the outer inclined groove 12 is provided between circumferentially adjacent center inclined grooves 11, 11 so as to incline an opposite direction to the center inclined grooves 11.

In each side of the tire equator C, the outer inclined grooves 12 include a first outer inclined groove 12A which has an axially inner end 12Ai positioned within the center portion CR and an axially outer end 12Ao positioned within the shoulder portion SH and a second outer inclined groove 12B which has axially inner and outer ends 12Bi, 12Bo both positioned within the middle portion MD.

Each first outer inclined grooves 12A comprises an axially inner part 15 which extends from the inner end 12Ai toward axially outside of the tire with an angle $\alpha$2a in a range of from 30 to 40 degrees with respect to the tire circumferential direction and an axially outer part 16 having an angle $\alpha$2b in a range of from 50 to 60 degrees with respect to the tire circumferential direction. The inner part 15 and the outer part 16 are connected through an inflection point 17. The inflection point 17 locates in the vicinity of the boundary B2 between the middle portion Md and the shoulder portion SH.

The first outer inclined groove 12A improves drainage performance of the tire due to cover a wide range from the center portion CR to the shoulder portion SH. Additionally, since the first outer inclined groove 12 has a large angle in the middle and shoulder portions MD and SH, the tread portion 2 further has enhanced torsional rigidity so that the transient characteristic improves. Preferably, the maximum groove width W3 and the maximum groove depth D3 (shown in Fig. 1) of the first outer inclined groove 12A are set in the same range with the maximum groove width W2 and the maximum groove depth D2 of the inner inclined groove 11.

The second outer inclined groove 12B has an angle $\alpha$3 in a range of from 15 to 25 degrees with respect to the tire circumferential direction to improve the drainage performance of the tire. Preferably, the maximum groove width W4 and the maximum groove depth D4 (shown in Fig. 1) of the second outer inclined groove 12B are set in the same range with the maximum groove width W2 and the maximum groove depth D2 of the inner inclined groove 11.

one aspect of the present invention, the tread portion 2 satisfies the following relation (3):

$$LF1 < LF2 < LF3 \ (3).$$

Here, LF1, LF2 and LF3 are land ratios of the center portion, middle portion and shoulder portion, respectively. The "land ratio" is a ratio of a tread surface area which contacts on the ground to a gross surface area of the tread portion in a condition that whole grooves are omitted in a defined region of the tread portion.

Since the tire 1 in accordance with the present invention has the tread portion 2 having rigidity gradually increasing toward the shoulder portion SH from the center portion CR, the turning transient characteristic and turning stability thereof are improved. Additionally, the drainage performance of the tire in straight traveling may be improved due to small land ratio LF1.

In order to further improve the advantages above, the ratio LF2/LF1 of the land ratio LF2 on the middle portion MD to the land ratio LF1 on the center portion CR is preferably in a range of from 101% to 106%. More preferably, the ratio LF2/LF1 is in a range of from 102% to 105%.

Similarly, the ratio LF3/LF2 of the land ratio LF3 on the shoulder portion SH to the land ratio LF2 on the middle portion MD is preferably set in the same range with the ratio LF2/LF1.

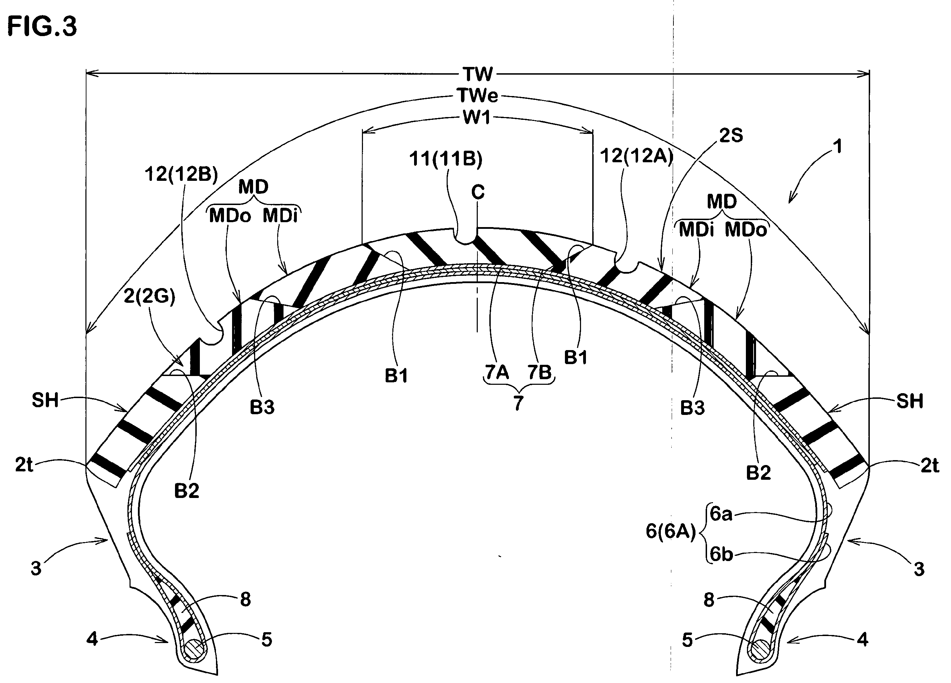

Fig. 3 is a cross sectional view of a motorcycle tire 1 showing another embodiment of the present invention. Referring to Fig. 3, the tire 1 has the tread rubber 2G comprising the middle portion Md which includes an inner middle portion MDi disposed in the side of the center portion CR and an outer middle portion MDo disposed on the side of the shoulder portion SH.

In this aspect, the middle portion MD has the following relations (4) and (5):

$$E^*2i < E^*2o \ (4),$$

and

$$0.9 \leq \tan \delta 2i/\tan \delta 2o \leq 1.1 \ (5).$$

Here, $E^*2i$ and $E^*2o$ are complex elastic moduli of the inner middle portion MDi and the outer middle portion MDo, respectively, and $\tan \delta 2i$ and $\tan \delta 2o$ are loss tangent of the inner and outer middle portions MDi, MDo, respectively.

Since the tire in accordance with the present invention has the tread rubber 2G having complex elastic moduli further smoothly increasing toward the shoulder portion SH from the center portion CR while substantially maintaining loss tangent thereof, turning stability and transient characteristic of the tire may further improve.

The ratio $(E^*2o-E^*2i)/E^*2i$ of the difference $(E^*2o-E^*2i)$ between the complex elastic modulus $E^*2o$ of the outer middle portion MDo and the complex modulus E*2i of the inner middle portion MDi to the complex elastic modulus E*2i is preferably set in the same range with the above-mentioned ratios (E*2-E*1)/E*1 and (E*3-E*2)/E*2.

Preferably, the land ratio LF2i of the inner middle portion MDi and the land ratio LF2o of the outer middle portion MDo have the following relation (9):

$$LF2i < LF2o \quad (9).$$

Thus, since rigidity of the tread rubber portion 2G further smoothly increases toward the shoulder portion SH from the crown portion CR, transient characteristic of the tire still further may improve.

The tire 1 in accordance with the embodiment has the boundary B3 between the inner middle portion MDi and the outer middle portion MDo which inclines from the ground contact surface 2s of the tread portion 2 toward the belt layer 7 with an inclination toward axially inwardly of the tire. Since rubber property of the tread rubber portion 2G further gradually changes, transient characteristic of the tire between straight traveling and turning may improve.

The present invention is more specifically described and explained by means of the following Examples and References. It is to be understood that the present invention is not limited to these Examples.

**Comparison Test 1**

Motorcycle tires each having a basic structure of Fig. 1 and a basic tread pattern of Fig. 2 except for details shown in Table 1 were made and tested. Major common specifics of tires are as follows.

Tire size

Front: 120/90ZR17
Rear: 180/55ZR17

Rim size

Front: MT3.50x17
Rear: MT5.50×17

Internal pressure:

Front: 250kPa
Rear: 290kPa

Tread development width TWe: 225mm

Tread width TW: 180mm
Development width of center portion W1: 45mm
Ratio W1/TWe: 20%

various chemicals used in each rubber composition of center, middle and shoulder portions are shown in Table 2. Major common specifics are as follows.

styrene-butadiene rubber (SBR): T4850 available from Asahi KASEI Corp.
Carbon black: N110 available from showa Cabot Corp.
Process oil: DIANAPROCESS PS32 available from Idemitsu Kosan Co., Ltd.
Antioxidant: ANTIGEN6C (N-(1,3-dimethylbutyl)-N'-phenyl-p-phenylenediamine) available from Sumitomo chemical company, Limited
Stearic acid: Stearic acid "Tsubaki" available from NOF Corporation
zinc oxide: zinc oxide #2 available from Mitsui Mining & Smelting Co., Ltd.
Sulfur: Powder sulfur available from Karuizawa Sulfur Co., Ltd.
Silica: VN3 available from Degussa Co.
silane coupling agent: Si75 available from Degussa Co.
wax: SUNNOC N available from Ouchi shinko chemical Industrial CO., LTD.

Vulcanization accelerator (1): NOCCELER NS (N-tert-butyl-2-benzothiazolylsulfeneamide) available from Ouchi Shinko chemical Industrial CO., LTD.
vulcanization accelerator (2): "SOKUSITOL-D" available from Sumitomo Chemical company, Limited
Test methods are as follows.

Turning stability, transient characteristic and ride comfort test:

Each test tire was installed in the motorcycle having a 600cc displacement. A test driver drove the motorcycle on a test course having a dry asphalt road, and evaluated turning stability, transient characteristic during turning and ride comfort by his feeling. Each test result was shown as a score of a maximum 10. The greater the score, the better the performance is.

**Drainage performance test:**

A test driver drove the motorcycle on a test course having a wet asphalt road, and evaluated drainage performance of the tire by his feeling. Each test result was shown as a score of a maximum 10. The greater the score, the better the performance is.

**Uneven wear resistance test:**

The test motorcycle above was driven on a dry asphalt road for 1,000 km, and then each wear amount of center, middle and shoulder portions was measured at three points in the tire circumferential direction in each portion, and the average wear amount in each portion was evaluated. The results are shown with an index of 100 representing a value in ref. 1. The larger the value, the better the performance is.

Test results are shown in Table 1

Table 1

|  | Ref. 1 | Ref. 2 | Ex.1 | Ex. 2 | Ex.3 | Ref. 3 | Ex. 4 | Ex.5 | Ref. 4 | Ex. 6 | Ex.7 |
|---|---|---|---|---|---|---|---|---|---|---|---|
| Center portion composition | - | No. 1 | No. 3 | No. 1 | No. 6 | No. 3 | No. 3 | No. 3 | No. 3 | No. 3 | No. 3 |
| Middle portion composition | - | No. 2 | No. 2 | No. 4 | No. 7 | No. 9 | No. 11 | No. 13 | No. 15 | No. 15 | No. 2 |
| Shoulder portion composition | - | No. 3 | No. 1 | No. 5 | No. 8 | No. 10 | No. 12 | No. 14 | No. 16 | No. 14 | No. 1 |
| Complex elastic modulus E*1(MPa) | - | 4 | 3.6 | 4 | 5.5 | 3.6 | 3.6 | 3.6 | 3.6 | 3.6 | 3.6 |
| Complex elastic modulus E*2(MPa) | - | 3.8 | 3.8 | 4.2 | 5.7 | 3.8 | 3.8 | 3.8 | 3.8 | 3.8 | 3.8 |
| Complex elastic modulus E*3(MPa) | - | 3.6 | 4 | 4.5 | 5.9 | 4 | 4 | 4 | 4 | 4 | 4 |
| Ratio (E*2-E*1)/E*1 (%) | - | -5 | 5.6 | 5 | 3.6 | 5.6 | 5.6 | 5.6 | 5.6 | 5.6 | 5.6 |
| Ratio (E*3-E*2)/E*2 (%) | - | -5.3 | 5.3 | 7.1 | 3.5 | 5.3 | 5.3 | 5.3 | 5.3 | 5.3 | 5.3 |
| Loss tangent tan $\delta$1 | - | 0.24 | 0.24 | 0.24 | 0.24 | 0.24 | 0.24 | 0.24 | 0.24 | 0.2 | 0.24 |
| Loss tangent tan $\delta$2 | - | 0.24 | 0.24 | 0.24 | 0.24 | 0.3 | 0.26 | 0.22 | 0.2 | 0.2 | 0.24 |

(continued)

| | Ref. 1 | Ref. 2 | Ex.1 | Ex. 2 | Ex.3 | Ref. 3 | Ex. 4 | Ex.5 | Ref. 4 | Ex. 6 | Ex.7 |
|---|---|---|---|---|---|---|---|---|---|---|---|
| Loss tangent $\tan \delta 3$ | - | 0.24 | 0.24 | 0.24 | 0.24 | 0.36 | 0.29 | 0.2 | 0.17 | 0.2 | 0.24 |
| $\tan \delta 1/\tan \delta 2$ | - | 1 | 1 | 1 | 1 | 0. 8 | 0.9 | 1.1 | 1.2 | 1 | 1 |
| $\tan \delta 2/\tan \delta 3$ | - | 1 | 1 | 1 | 1 | 0.8 | 0.9 | 1.1 | 1.2 | 1 | 1 |
| Land ratio LF1 (%) | - | 85 | 85 | 85 | 85 | 85 | 85 | 85 | 85 | 85 | 88 |
| Land ratio LF2 (%) | - | 88 | 88 | 88 | 88 | 88 | 88 | 88 | 88 | 88 | 88 |
| Land ratio LF3 (%) | - | 91 | 91 | 91 | 91 | 91 | 91 | 91 | 91 | 91 | 88 |
| Turning stability (Score) | 5 | 5 | 9 | 10 | 10 | 9 | 9 | 8 | 6 | 7 | 7 |
| Transient characteristic (Score) | 10 | 8 | 8 | 8 | 8 | 6 | 7 | 8 | 8 | 8 | 6 |
| Ride comfort (Score) | 5 | 5 | 10 | 5 | 3 | 10 | 10 | 10 | 10 | 10 | 10 |
| Drainage performance (Index) | 100 | 100 | 100 | 100 | 100 | 100 | 100 | 100 | 100 | 100 | 100 |
| Uneven wear resistance (Index) | 100 | 100 | 110 | 110 | 110 | 70 | 100 | 110 | 110 | 110 | 110 |

Table 2

| Composition No. | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| SBR | 150 | 150 | 150 | 150 | 150 | 150 | 150 | 150 | 150 | 150 | 150 | 150 | 150 | 150 | 150 | 150 |
| Carbon black | 70 | 70 | 70 | 70 | 70 | 70 | 70 | 70 | 76 | 72 | 72 | 75 | 68 | 66 | 66 | 63 |
| Silica | 30 | 30 | 30 | 30 | 30 | 30 | 30 | 30 | 30 | 30 | 30 | 30 | 30 | 30 | 30 | 30 |
| Silane coupling agent | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 | 2.4 |
| Process oil | 19 | 21 | 23 | 17 | 14 | 4 | 2 | 0 | 28.5 | 36 | 23.5 | 26 | 18.5 | 14 | 12 | 10 |
| Wax | 2 | 2 | 2 | 2 | 2 | 2 | 2 | 2 | 2 | 2 | 2 | 2 | 2 | 2 | 2 | 2 |
| Antioxidant | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Stearic acid | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Sulfur | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator(1) | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Vulcanization accelerator(2) | 1 | 1 | 1 | 1 | 1 | 1 | 1 | 1 | 1 | 1 | 1 | 1 | 1 | 1 | 1 | 1 |

*1) Unit: mass %
*2) SBR contains oil of 50% in mass.

From the test results, it was confirmed that Example tires in accordance with the present invention can be effectively improved turning stability as well as ride comfort.

**Comparison Test 2**

Motorcycle tires each having a basic structure of Fig. 3 and a basic tread pattern of Fig. 2 except for the detail shown in Table 3 were made and tested. Major common specifics of tires are the same with the Comparison Test 1.
Test results are shown in Table 3. From the test results, it was confirmed that Example tire can be also effectively improved turning stability as well as ride comfort.

Table 3

|  | Ref. 1 | Ex. 8 |
|---|---|---|
| Center portion composition | - | No. 3 |
| Inner middle portion composition | - | No. 2 |
| Outer middle portion composition | - | No. 1 |
| Shoulder portion composition | - | No. 4 |
| Complex elastic modulus E*1(MPa) | - | 3.6 |
| Complex elastic modulus E*2i (MPa) | - | 3.8 |
| Complex elastic modulus E*2o(MPa) | - | 4 |
| Complex elastic modulus E*3(MPa) | - | 4.2 |
| Ratio (E*2i-E*1) /E*1 (%) | - | 5.6 |
| Ratio (E*2o-E*2i) /E*2i (%) | - | 5.3 |
| Ratio (E*3-E*2o) /E*2o (%) | - | 5 |
| Loss tangent tan $\delta$1 | - | 0.24 |
| Loss tangent tan $\delta$2i | - | 0.24 |
| Loss tangent tan $\delta$2o | - | 0.24 |
| Loss tangent tan $\delta$3 | - | 0.24 |
| tan $\delta$1/tan $\delta$2i | - | 1 |
| tan $\delta$2i/tan $\delta$2o | - | 1 |
| tan $\delta$2o/tan $\delta$3 | - | 1 |
| Land ratio LF1 (%) | - | 85 |
| Land ratio LF2i (%) | - | 88 |
| Land ratio LF2o(%) | - | 88 |
| Land ratio LF3(%) | - | 91 |
| Turning stability (Score) | 5 | 10 |
| Transient characteristic (Score) | 5 | 8 |
| Ride comfort (Score) | 5 | 10 |
| Drainage performance (Index) | 100 | 100 |
| Uneven wear resistance (Index) | 100 | 110 |

**Claims**

1. A motorcycle tire (1) comprising
a tread portion (2) having a tread outer surface between tread edges (2t), the tread outer surface protruding radially outwardly of the tire (1) in a convex arc-like manner,
the tread portion including a tread rubber portion (2G),
the tread rubber portion (2G) including
a center portion (CR) disposed in a center region of the tread portion including a tire equator (C),
a pair of shoulder portions (SH) each of which is disposed in each side of the tread edge (2t) and
a pair of middle portions (MD) each of which is disposed between the center and shoulder portions in each side of
the tire equator (C), and
the center, middle and shoulder portions satisfy the following relations:

$$E^*1 < E^*2 < E^*3 \,,$$

$$0.9 \le \tan\delta1/\tan\delta2 \le 1.1,$$

and

$$0.9 \le \tan\delta2/\tan\delta3 \le 1.1,$$

wherein E*1, E*2 and E*3 are complex elastic moduli of the center portion (CR), middle portion (MD) and shoulder
portion (SH) respectively, and tanδ1, tanδ2 and tanδ3 are loss tangent of the center portion (CR), middle portion
(MD) and shoulder portion (SH) respectively.

2. The tire according to claim 1, wherein
the complex elastic modulus of the center portion (CR) is in a range of from 4.0 to 5.5 MPa, and
the loss tangent of the center portion (CR) is in a range of from 0.20 to 0.24.

3. The tire according to claim 1, wherein
the tread portion (2) satisfies the following relation:

$$LF1 < LF2 < LF3,$$

wherein LF1, LF2 and LF3 are land ratios each on the center portion (CR), middle portion (MD) and shoulder portion
(SH) respectively.

4. The tire according to claim 1, wherein
the middle portion (MD) includes an inner middle portion (MDi) disposed in the side of the center portion (CR) and
an outer portion disposed in the side of the shoulder portion (SH), and
the middle portion has the following relation:

$$E^*2i < E^*2o,$$

and

$$0.9 \le \tan\delta2i/\tan\delta2o \le 1.1,$$

wherein E*2i and E*2o are complex elastic moduli of the inner middle portion (MDi) and the outer middle portion
(MDo) respectively, and tanδ2i and tanδ2o are loss tangent of the inner middle and outer middle portion respectively.

**Patentansprüche**

1. Motorradreifen (1), umfassend

einen Laufflächenabschnitt (2), der eine Laufflächen-Außenfläche zwischen Laufflächenkanten (2t) aufweist, wobei die Laufflächen-Außenfläche von dem Reifen (1) in Art eines konvexen Bogens radial nach außen vorsteht, wobei der Laufflächenabschnitt einen Laufflächenkautschukabschnitt (2G) umfasst, wobei der Laufflächenkautschukabschnitt (2G) einen zentralen Abschnitt (CR), der in einem zentralen Bereich des Laufflächenabschnitts, der einen Reifenäquator (C) einschließt, angeordnet ist, ein Paar Schulterabschnitte (SH), von denen jeder auf jeder Laufflächenkantenseite (2t) angeordnet ist, und ein Paar mittlere Abschnitte (MD), von denen jeder zwischen den zentralen und Schulterabschnitten auf jeder Seite des Reifenäquators (C) angeordnet ist, umfasst, und die zentralen, mittleren und Schulterabschnitte die folgenden Beziehungen erfüllen:

$$E^*1 < E^*2 < E^*3,$$

$$0,9 \leq \tan\delta1 \,/\, \tan\delta2 \leq 1,1,$$

und

$$0,9 \leq \tan\delta2 \,/\, \tan\delta3 \leq 1,1,$$

wobei $E^*1$, $E^*2$ und $E^*3$ komplexe Elastizitätsmoduln des zentralen Abschnitts (CR), des mittleren Abschnitts (MD) bzw. des Schulterabschnitts (SH) sind, und $\tan\delta1$, $\tan\delta2$ und $\tan\delta3$ der Verlusttangens des zentralen Abschnitts (CR), des mittleren Abschnitts (MD) bzw. des Schulterabschnitts (SH) sind.

2. Reifen nach Anspruch 1, wobei
der komplexe Elastizitätsmodul des zentralen Abschnitts (CR) in einem Bereich von 4,0 bis 5,5 MPa liegt, und
der Verlusttangens des zentralen Abschnitts (CR) in einem Bereich von 0,20 bis 0,24 liegt.

3. Reifen nach Anspruch 1, wobei
der Laufflächenabschnitt (2) die folgende Relation erfüllt:

$$LF1 < LF2 < LF3,$$

wobei LF1, LF2 und LF3 jeweils Landverhältnisse an dem zentralen Abschnitt (CR), dem mittleren Abschnitt (MD) bzw. dem Schulterabschnitt (SH) sind.

4. Reifen nach Anspruch 1, wobei
der mittlere Abschnitt (MD) einen inneren mittleren Abschnitt (MDi), der auf der Seite des zentralen Abschnitts (CR) angeordnet ist, und einen äußeren Abschnitt, der auf der Seite des Schulterabschnitts (SH) angeordnet ist, umfasst, und
der mittlere Abschnitt die folgende Relation aufweist:

$$E^*2i < E^*2o,$$

und

$$0,9 \leq \tan\delta2i \,/\, \tan\delta2o \leq 1,1,$$

wobei $E^*2i$ und $E^*2o$ komplexe Elastizitätsmoduln des inneren mittleren Abschnitts (MDi) bzw. des äußeren mittleren Abschnitts (MDo) sind, und $\tan\delta2i$ und $\tan\delta2o$ jeweils der Verlusttangens des inneren mittleren bzw. äußeren mittleren Abschnitts sind.

**Revendications**

1. Pneumatique pour motocyclette (1) comprenant
une portion formant bande de roulement (2) ayant une surface extérieure de roulement entre des bordures de roulement (2t), la surface extérieure de roulement se projetant radialement vers l'extérieur du pneumatique (1) à la manière d'un arc convexe,
la portion formant bande de roulement incluant une portion de caoutchouc de roulement (2G), la portion de caoutchouc de roulement (2G) incluant
une portion centrale (CR) disposée dans une région centrale de la portion formant bande de roulement incluant un équateur de pneumatique (C),
une paire de portions d'épaulement (SH) dont chacune est disposée sur chaque côté de la bordure de roulement (2t) et une paire de portions médianes (MD) dont chacune est disposée entre la portion centrale et les portions d'épaulement de chaque côté de l'équateur de pneumatique (C), et
la portion centrale, les portions médianes et les portions d'épaulement satisfont les relations suivantes :

$$E^{*}1 < E^{*}2 < E^{*}3,$$

$$0,9 \leq \tan\delta1/\tan\delta2 \leq 1,1,$$

et

$$0,9 \leq \tan\delta2/\tan\delta3 \leq 1,1,$$

dans lesquelles E*1, E*2 et E*3 sont des modules élastiques complexes de la portion centrale (CR), des portions médianes (MD) et des portions d'épaulement (SH) respectivement, et $\tan\delta1$, $\tan\delta2$ et $\tan\delta3$ sont les tangentes de perte de la portion centrale (CR), des portions médianes (MD), et des portions d'épaulement (SH) respectivement.

2. Pneumatique selon la revendication 1, dans lequel
le module élastique complexe de la portion centrale (CR) est dans une plage de 4,0 à 5,5 MPa, et
la tangente de perte de la portion centrale (CR) est dans une plage de 0,20 à 0,24.

3. Pneumatique selon la revendication 1, dans lequel
la portion formant bande de roulement (2) satisfait les relations suivantes :

$$LF1 < LF2 < LF3,$$

dans lesquelles LF1, LF2 et LF3 sont les rapports de relief pris chacun sur la portion centrale (CR), les portions médianes (MD) et les portions d'épaulement (SH) respectivement.

4. Pneumatique selon la revendication 1, dans lequel
la portion médiane (MD) inclut une portion médiane intérieure (MDi) disposée sur le côté de la portion centrale (CR) et une portion extérieure disposée sur le côté de la portion d'épaulement (SH), et
la portion médiane a les relations suivantes :

$$E^{*}2i < E^{*}2o,$$

et

$$0,9 \leq \tan\delta2i/\tan\delta2o \leq 1,1,$$

dans lesquelles E*2i et E*2o sont les modules élastiques complexes de la portion médiane intérieure (MDi) et de la portion médiane extérieure (MDo) respectivement, et $\tan\delta 2i$ et $\tan\delta 2o$ sont les tangentes de perte de la portion médiane intérieure et de la portion médiane extérieure respectivement.

# FIG.1

EP 2 662 226 B1

## FIG.2

# FIG.3

EP 2 662 226 B1

**EP 2 662 226 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007131112 A
- EP 2108529 A1
- EP 2402176 A1
- EP 2183653 A1